# EUROPEAN PATENT APPLICATION

(11) **EP 2 731 064 A1**
(43) Date of publication of application: **14.05.2014**
(21) Application number: 12191881.7
(22) Date of filing: 08.11.2012
(51) Int. Cl.: G06Q 10/08

(54) **Method and system for operating logistics chain**

(71) Applicant: Logit Systems AS, 4898 Grimstad (NO)
(72) Inventor: Knoors, Frank, 3620 Lanaken (BE)
(74) Representative: Håmsø Patentbyrå ANS

(57) **Abstract**

Method/system for operating a logistics chain in which transport units are handled by services according to orders. Data supplied by the plurality of services is accumulated in a knowledge base. An execution plan comprises an overview of handlings of the transport units that have occurred and are expected. The accumulated data is standarised into events which are in a predefined data format. Among the standardised events, sets of related events are detected. Predefined rules are provided for comparing the related events, defining actions to be performed and conclusions that can be drawn from the comparison results. The execution plan is updated on the basis of the actions and conclusions.

## Description

### Technical field

The present invention relates to a method for operating a logistics chain in which a plurality of transport units are handled by a plurality of services according to a plurality of orders.

The present invention further relates to a system for operating a logistics chain in which a plurality of transport units are handled by a plurality of services according to a plurality of orders.

### Background art

In the field of logistics, traditional systems used by asset-based operators or agents manage services separately according to their respective transportation domain, e.g. trucks and trailers, terminal operations, fleets of vessels, trade compliance or other domains. As a result, traditional systems cannot manage globally interchanging or shifting means of transportation.

A method and system for operating a logistics chain involving multiple agents is for example known from US 2010/0185482 A1. The known method comprises: updating a knowledge base populated with information comprising: a status of the handled goods; a status of the agents involved who handle the goods; a plurality of rules for establishing expected behaviors of the goods and of the agents; and the orders. The method further comprises: determining, based on at least a portion of the information in the knowledge base, a plurality of instructions to be executed by the agents for moving the goods to achieve the orders; sending the instructions to the agents; receiving the instructions for execution by the agents. Upon completion of one of the instructions by one of the agents or when an event affects one of the instructions executed by one of the agents, this agent returns a status of the goods or its own status to the knowledge base. The determining of the instructions for the agents comprises using an artificial intelligence system on a computer, which generates expectations for behaviour of goods or agents on the basis of a historical database.

### Disclosure of the invention

It is an aim of this invention to provide a method for operating a logistics chain with which a more complete and more reliable insight of the status of the logistics chain can be achieved.

According to the present invention, the aforementioned aim is achieved with the method comprising the steps of the first independent claim.

It is another aim of this invention to provide a system for operating a logistics chain which can provide a more complete and more reliable insight of the status of the logistics chain.

According to the present invention, the other aim is achieved with the system comprising the characteristics of the second independent claim.

According to the invention, a method is provided for operating (i.e. monitoring, controlling or else operating) a logistics chain in which a plurality of transport units are handled (i.e. moved, treated or any other logistics activity) by a plurality of services according to a plurality of orders, the method comprising the steps of: (a) accumulating data supplied by the plurality of services in a knowledge base, the data comprising at least status data related to the services and status data related to the transport units; and (b) maintaining an execution plan comprising an overview of handlings of the transport units that have already occurred and expected handlings of the transport units that are to occur in accordance with the orders. In particular, the method further comprises the steps of: (c) standardising the status data related to the services and the status data related to the transport units into events which are in a predefined data format for being comparable with each other, the predefined data format comprising an event identifier, a transport unit identifier, a time identifier and a location identifier; (d) detecting, among the standardised events, sets of related events that relate to the same transport unit, on the basis of at least the transport unit identifier; (e) providing a plurality of predefined rules for comparing the related events and defining conclusions which can be drawn from the comparison results and actions to be performed on the basis of the comparison results; (f) applying the predefined rules to each set of related events; and (g) updating the execution plan on the basis of the actions and conclusions defined by the predefined rules.

According to the invention, each transport unit may be one unit, a package, a unit load, a container, a transport means or a piece of transport fleet (i.e. a truck, train, vessel, ...), bulk material or any other transport unit known to the person skilled in the art.

According to the invention, each service may be any activity by an organization which may be involved in handling the transport units between their origin and their destination, such as for example shippers, railway companies, truck operators, container terminal operators, customs, or other services. Note that this is not limited to physical distribution or handling activities, but can also concern activities like customs compliance / documentary services, goods inspections, etc.

According to the invention, the status data related to the services may comprise status updates or reports provided by the services, such as for example container A contains goods a, b, c, ...; container A has been loaded onto vessel X; vessel X has departed from harbour Y; vessel X is being loaded or unloaded; etc. The status can be an actual status but also an estimated status (if it informs about the expected future status changes), or it can inform on the real-time availability of the service (changes in the schedules or in available capacity). Note that also the fact that status information has not been received (but was expected) may also be relevant to create an event.

According to the invention, the status data related to the transport units may comprise for example location updates, cargo condition data, security status and the like provided by the services or external systems, such as for example positional data (e.g. GPS coordinates provided by tracking & tracing systems); but also general information on the location of the transport units within other (larger) transport units, e.g. that container A is located on vessel X or train Y, etc.

According to the invention, the status data related to the services and the status data related to the transport units is standardized into "events". These events are in a predefined data format, so that they are comparable with each other, for example by means of a processing device. The predefined data format comprises a transport unit identifier, i.e. an identifier which may indicate the relevant transport unit and/or the relevant larger transport unit in which the considered transport unit is located or transported. The predefined data format further comprises a time identifier and a location identifier, which indicate where the relevant transport unit (or the larger transport unit) is located and at what time. As a result of this standardisation to comparable events, the events relating to the same transport unit can be easily and quickly detected and compared and the comparison results can be used to enhance the completeness, timeliness and reliability of the data accumulated in the knowledge base, so that a real situational awareness can be achieved. Furthermore, the efficiency of the accumulation of data can be enhanced and the need for certain expensive systems, such as providing a tracking device on each freight container, can in some case be avoided. In this way, a better reliability and completeness of the execution plan, which provides an insight of handlings of the transport units that have already occurred and expected handlings of the transport units that are to occur in accordance with the orders, can be achieved.

In embodiments according to the present invention, the conclusions defined in the predefined rules may comprise one or more of the following: confirmations that the compared related events are in line with each other, time deviations to indicate that the time identifier of one of the related events of a set significantly differs from the time identifier of another of the related events of that set, location deviations to indicate that the location identifier of one of the related events of a set differs from the location identifier of another of the related events of that set.

In embodiments according to the present invention, the transport units may comprise goods, for example packages, containers or bulk goods, and transport means, for example vessels, trucks, trains; the predefined data format may further comprise a transport means identifier and the conclusions defined in the predefined rules may further comprise transport means deviations to indicate that the transport means identifier of one of the events is different from the transport means indicated in the execution plan.

In embodiments according to the present invention, the execution plan may comprise a series of expectations defining the handlings of the transport units that have already occurred and expected handlings of the transport units that are to occur, the expectations being in the same predefined data format as the events. In this way, the expectations can be easily and efficiently compared with the events and/or the expectations can be easily and efficiently updated on the basis of the conclusions drawn from the events.

In embodiments according to the present invention, the actions defined in the predefined rules may comprise instructions for updating the expectations on the basis of the conclusions.

In embodiments according to the present invention, the conclusions defined in the predefined rules may comprise conflicts to indicate conflicting differences in the related events of a set; and the method may comprise the step of notifying the conflicts to users.

In embodiments according to the present invention, the method may further comprise the steps of assigning confidence levels to the events and giving events with higher confidence levels a higher priority in the predefined rules.

In embodiments according to the present invention, the execution plan may further comprise at least one set of alternative handlings of the transport units that are considered for the case that the expected handlings cannot occur in accordance with the orders. In this way, alternative routes for the transport units can be taken into consideration by the user.

In embodiments according to the present invention, the actions defined in the predefined rules comprise instructions for rerouting the related transport unit via one of the sets of alternative handlings. In this way, time delays as a result of deviations or unexpected events can be at least partly compensated, such that the relevant transport unit may still be delivered in accordance with, or as close as possible to the relevant order.

In embodiments according to the present invention, the method may further comprise the step of presenting the execution plan, updates of the execution plan or notifications derived therefrom in real-time to a plurality of subscribers.

The invention further provides a system for operating a logistics chain in which a plurality of transport units are handled by a plurality of services according to a plurality of orders, the system comprising:
a knowledge base provided with an input interface for interfacing with the plurality of services and accumulating data supplied by the plurality of services, the data comprising at least status data related to the services and status data related to the transport units; and
a computer system provided for maintaining an execution plan comprising an overview of handlings of the transport units that have already occurred and expected handlings of the transport units that are to occur in accordance with the orders; the computer system comprising:
   standardising means provided for standardising the status data related to the services and the status data related to the transport units into events which are in a predefined data format for being comparable with each other, the predefined data format comprising an event identifier, a transport unit identifier, a time identifier and a location identifier;
   detecting means provided for detecting, among the standardised events, sets of related events that relate to the same transport unit, on the basis of at least the transport unit identifier;
   storage means, storing a plurality of predefined rules for comparing the related events and defining conclusions which can be drawn from the comparison results and actions to be performed on the basis of the comparison results;
   rule applying means provided for applying the predefined rules to each set of related events; and
   updating means provided for updating the execution plan on the basis of the conclusions and actions defined by the predefined rules.
   In embodiments according to the invention, the system may further comprises equivalent means for fulfilling the function or performing the steps of the embodiments of the method according to the invention as described above.

### Brief description of the drawings

The invention will be further elucidated by means of the following description and the appended drawings.
Figure 1 shows an overview of a logistics chain operating system according to an embodiment of the invention.
Figures 2-6 show embodiments of predefined rules applicable in embodiments of the method or system according to the invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

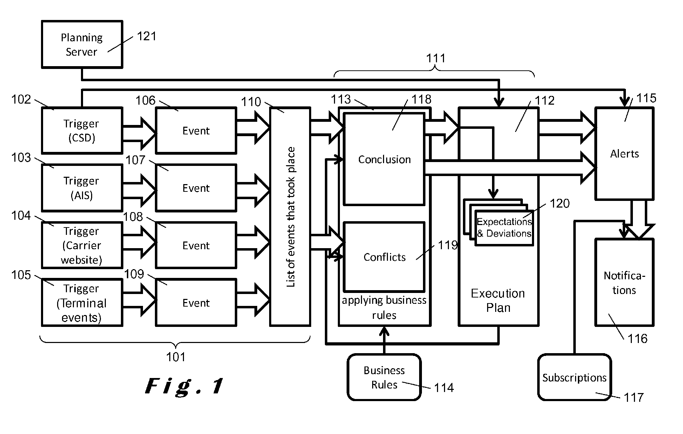

Figure 1 shows an embodiment according to the invention of a system, provided for operating a logistics chain in which a plurality of transport units are handled by a plurality of services according to a plurality of orders. The transport units may be single units, a package, a unit load, a container, a piece of transport fleet (i.e. a truck, train, vessel, ...), bulk material or any other transport unit known to the person skilled in the art. The "orders" may be defined as requests from any party to receive a transport unit on a given destination at a given point in time. The system comprises a knowledge base 101 provided with an input interface 102-105 for interfacing with different "triggers" and accumulating data supplied thereby. The "triggers" may be services involved in the logistics chain, i.e. any organization which may be involved in handling the transport units between their origin and their destination, such as for example shippers, railway companies, truck operators, container terminal operators, customs, or other services; but also external data sources like track&trace systems, weather forecast servers, or other external data sources, i.e. outside the logistics chain but still providing information which may be relevant for the execution plan of the logistics chain. The data which is supplied by the different services may comprise status data related to the services and status data related to the transport units. The data supplied by the external data sources may comprise weather forecasts, storm alerts or the like, or GPS coordinates of transport units supplied by track&trace systems or the like, or other network status information like information on strikes, traffic congestions etc.

A computer or server system 111 or the like provided with appropriate software code portions provides a means for maintaining the execution plan which comprises an overview of handlings of the transport units that have already occurred and expected handlings of the transport units that are to occur in accordance with the orders. This computer or server system may comprise one or more processing device(s) with appropriate software code portions, forming:
● standardising means, provided for standardising the status data related to the services and the status data related to the transport units into standardised events 106-109, which are in a predefined data format for being comparable with each other and may be kept for example in an event list 110 of the knowledge base 101;
● detecting means, provided for detecting, among the standardised events, sets of related events that relate to the same transport unit, on the basis of at least a transport unit identifier of the predefined data format;
● rule applying means 113, provided for applying predefined rules to each set of related events; and
● execution plan updating means 112, provided for updating the execution plan on the basis of the actions defined by the predefined rules.
The predefined rules are provided for comparing the related events and define the actions to be performed on the basis of the results of the comparison. They may be stored in a storage means, for example in the knowledge base 101 but also in a separate memory 114.

The predefined data format of the standardised events comprises at least an event identifier, a transport unit identifier, a time identifier and a location identifier. The transport unit identifier may indicate the relevant transport unit and/or the relevant larger transport unit in which the considered transport unit is located or transported. The time identifier and the location identifier indicate where the relevant transport unit (or the larger transport unit) is located and at what time. As a result of this standardisation to comparable events, the events relating to the same transport unit can be easily and quickly detected and compared and the comparison results can be used to enhance the reliability of the data accumulated in the knowledge base 101. In this way, a better reliability and completeness of the execution plan, which comprises an overview of handlings of the transport units that have already occurred and expected handlings of the transport units that are to occur in accordance with the orders, can be achieved, to the extent that situational awareness can be created.

In the following, the process implemented by the system of figure 1 will be described in more detail. The following abbreviations are used:
- ATL: Actual time of loading
- CAR: Carrier
- CT: Container
- CTD: Containers time of discharge
- LOC: Location
- TERM: Terminal
- TIME: Time window
- VE: Vessel

The execution plan for a given transport unit can be created in the system on the basis of the order, or for example be uploaded from an external planning server 121 at a courier company. The execution plan for e.g. a container CT is made up by a series of **expectations** 120 for that specific container. Each 'expectation' represents a different step in the logistics process that has been planned as part of the execution plan. It can make reference to the transport means and locations (e.g. port of loading, port of discharge) involved. The expectation defines the process or flow of the containers.
For example, an execution plan may comprise the following expectations:
1. CT loaded into VE in LOC(a) at TIME;
2. VE departs from LOC(a) at TIME with CT on board;
3. VE expected at LOC(b) at TIME with CT on board;
4. VE arrives at LOC(b) at TIME with CT on board;
5. CT discharged from VE in LOC(b) at TIME.
In this example, an expectation has so-called pattern parameters CT, VE, LOC, TIME. For each expectation, there may be deviations, i.e. where it appears from the events that parameters differ from the parameters in the expectation. This may occur for all parameters except the transport unit CT. In the following, deviating parameters are indicated by underlined text. So for (1) above there may be the expectation ATL (CT, VE, LOC, TIME) and the deviation ATL (CT, VE, LOC, TIME). It is clear that depending on the size of the deviation, the other expectations (2)-(5) above may also be affected.

The **triggers** 102-105 can be an external trigger (either by receiving a message, or receiving a manual intervention by the user), or internal trigger (e.g. when a time trigger leads to automatic rescheduling). A trigger is anything that leads to an event 106-109 and that can be evaluated in the context of other events in the event list 110. In this way, a uniform way of handling events and conclusions 113 is achieved. This supports traceability of which events led to what conclusions.

An **event** is a logical fact, represented in a standardized way, based on the trigger data that has arrived. A trigger data can also lead to multiple events. The following sources for triggers are shown in figure 1:
● CAR - Carrier website
● CSD - Container device
● AIS - Vessel AIS signal
● TERM - Terminal
Another possible trigger is a manual user input.
The Event type indicates which transport object the event affects:
● LoadUnit
● Service
● TransportMeans
The Event result is the potential conclusion that can be made:
● ATA (add footnotes) - Actual time of Arrival
● ATD - Actual time of Departure
● ATL - Actual time of Loading
● ATU - Actual time of Unloading
Confidence is a numeric value (0-100) that indicates how confident the event is, 100 is the maximum confidence level.

The **conclusions** 118 are facts that can be deduct unambiguously based on the events 106-109 and business rules 114, and where there is also sufficient confidence that these facts are true. There are three types of conclusions:
1) Positive conclusion: These are facts that confirm an expectation as expressed in the execution plan.
2) Negative conclusion: These are facts that confirm a deviation as expressed in the execution plan, but that can be resolved. See below for "anomaly", which in the future could become a negative conclusion.
3) No conclusion: This means that there is no fact resulting from the business rules that confirms either the expectation or the deviation.

The **conflicts** 119 are facts that cannot be submitted to the execution plan, for a variety of reasons:
1) It highlights an ambiguity, as there are multiple events that give contradictory information, which cannot be resolved by the use of the business rules. Take as an example that ATA 'monday' is received (from an ocean carrier website) and ATA 'tuesday' (through AIS), and there is no business rule in place that gives preference to AIS above the other, but there is a business rule that detects this difference and creates a conflict.
2) It highlights an uncertainty, as there is not enough confidence about the information that is given by one or more events. Take as an example the location determined by GSM.
3) It highlights an anomaly, which could be described as something similar to a negative conclusion but then of a kind that cannot be processed easily into the execution plan. Take as an example that a confirmation is received that a container is discharged but in a port different from the port of departure in the execution plan. Depending on the circumstances or with appropriate business rules, this could also be a negative conclusion.

An **alert** 115 is a situation that may require attention of the user, independent of whether and how it is being communicated. In the context of the above, all conclusions 118 and conflicts 119 could lead to alerts. But also a change-of-plan could lead to alerts.

A **notification** 116 is a directed communication of an alert to a specific user, either through a message or by displaying it on his notice board, for example on the basis of subscriptions to the notifications provided by the system.

In the following, a few examples of the predefined rules, also called "business rules" heiren, are given. The criteria for the different rules within the expectation are represented in pseudo code. If certain criteria parameters are not mentioned, it means that a specific match is not required.

### Example 1:

"IF AIS (LOC) != ATL (CT, LOC, TIME)"

This means AIS location (LOC) is different from the criterion location parameter in the actual time of loading ATL expectation, but time and CT match. This means that the container CT is loaded in a different location than expected.

### Example 2:

"Conclusion ATL (CT, VE, LOC, TIME) when
[CAR msg == ATL (CT, VE, LOC, TIME) OR TERM msg == ATL (CT, VE,
LOC, TIME)] AND NOT DeviatingLocation
End"

This means that the CAR message matches all the ATL criteria parameters in the expectation AND not having DeviatingLocation (see below) then a conclusion ATL is created. "DeviatingLocation" is defined elsewhere.

### Example 3:

"DeviatingLocation when
[IF CSD (LOC) != ATL (CT, LOC, TIME)]
OR
[IF AIS (LOC) != ATL (LOC, TIME)]
End"

DeviatingLocation is true if the CSD Location is different from the ATL Location, while the other parameters (CT, TIME) shall match. OR the AIS Location is different from the ATL Location, while the TIME parameter shall match the criteria.

### Example 4:

"ATL (CT, VE, LOC, TIME) when
[CAR msg (VE) != ATL (CT, VE, LOC)
OR TERM msg (VE) != ATL (CT, VE, LOC)]
End"

The ATL conclusion is a confirmation generated based on either a message/report from the carrier CAR or the terminal TERM, i.e. triggers 104 or 105.

The above shows that the same type of predefined data format can be used for the events as well as the expectations/deviations, leading to possibilities to easily compare the two or adapt the expectations based on the events.

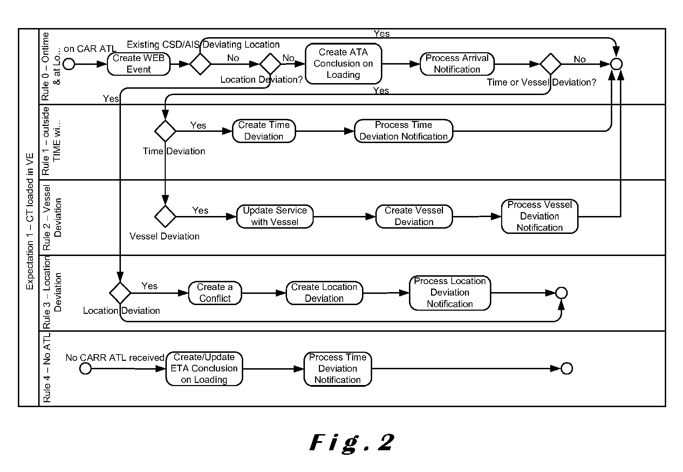

Figure 2 shows an example of rules that may be applied in the case of expectation (1) above: actual time of loading ATL (CT, VE, LOC, TIME). This is the first expectation in the execution plan from port of loading to port of destination and the affirmative conclusion is equal to the expectation:
R ule 0 = Container CT loaded into Vessel VE at in Location LOC at time TIME However there are also a number of conclusions that indicate that there is a deviation from this expectation:
   R ule 1 = Container is loaded outside the TIME window criteria
   R ule 2 = Container is loaded into a different vessel
   R ule 3 = Container is loaded into a vessel at a different location
   R ule 4 = No ATL received for that container before or within the time windows + a margin

In the case of Rule 1-4 the rule returns a time deviation, vessel deviation or location deviation as shown.

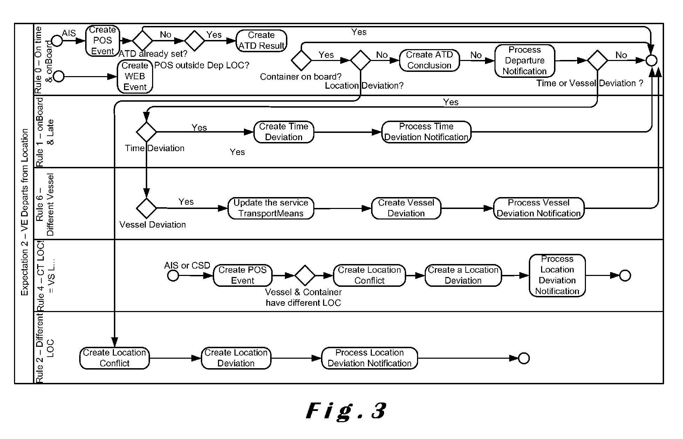

Figure 3 shows an example of rules that may be applied in the case of expectation (2) above: vessel VE departs from location LOC. Rule 0 indicates that the vessel departs on time, the other Rules indicate respectively late departure, different vessel, different vessel and location, different location. This is an example where different events are created from the data received from different triggers and are evaluated and compared to each other to enhance data integrity and overall reliability and completeness of the system.

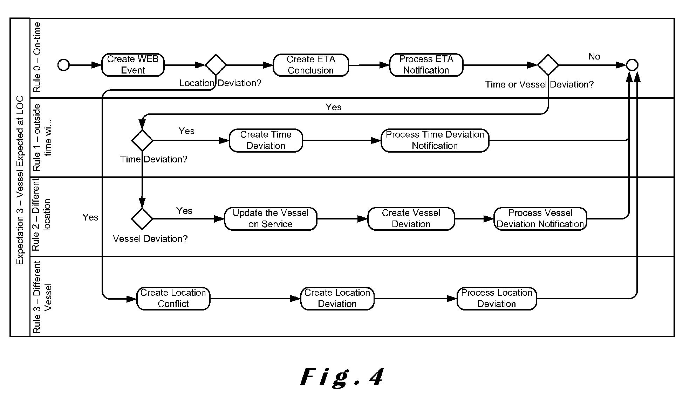

Figure 4 shows an example of rules that may be applied in the case of expectation (3) above: vessel VE expected at location LOC. Rule 0 indicates that the vessel is expected on time, the other Rules indicate respectively late expected arrival, different location, different vessel.

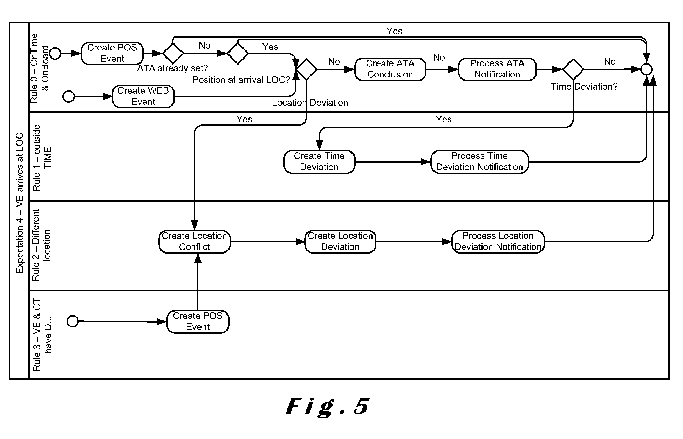

Figure 5 shows an example of rules that may be applied in the case of expectation (4) above: vessel VE arrives at location LOC. Rule 0 indicates that the vessel arrives on time with CT on board, the other Rules indicate respectively late arrival, different location, different vessel. This is another example where different events are created from the data received from different triggers and are evaluated and compared to each other to enhance data integrity and overall reliability and completeness of the system.

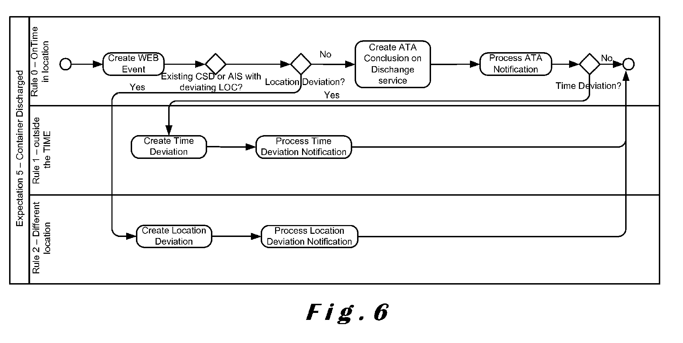

Figure 6 shows an example of rules that may be applied in the case of expectation (5) above: actual time of discharge ATD (CT, VE, LOC, TIME). This is the last expectation in the execution plan from port of loading to port of destination. The event that is created is compared with an existing CSD or AIS event in the list to check if there is a deviating location.

## Claims

1. A method for operating a logistics chain in which a plurality of transport units are handled by a plurality of services according to a plurality of orders, the method comprising the steps of:
a) accumulating data supplied by the plurality of services in a knowledge base, the data comprising at least status data related to the services and status data related to the transport units; and
b) maintaining an execution plan comprising an overview of handlings of the transport units that have already occurred and expected handlings of the transport units that are to occur in accordance with the orders;
**characterized in that** the method further comprises the steps of
c) standardising the status data related to the services and the status data related to the transport units into events which are in a predefined data format for being comparable with each other, the predefined data format comprising an event identifier, a transport unit identifier, a time identifier and a location identifier;
d) detecting, among the standardised events, sets of related events that relate to the same transport unit, on the basis of at least the transport unit identifier;
e) providing a plurality of predefined rules for comparing the related events and defining conclusions which can be drawn from the comparison results and actions to be performed on the basis of the comparison results;
f) applying the predefined rules to each set of related events; and
g) updating the execution plan on the basis of the conclusions and the actions defined by the predefined rules.

2. The method according to claim 1, wherein the conclusions defined in the predefined rules comprise one or more of the following: confirmations that the compared related events are in line with each other, time deviations to indicate that the time identifier of one of the related events of a set significantly differs from the time identifier of another of the related events of that set, location deviations to indicate that the location identifier of one of the related events of a set differs from the location identifier of another of the related events of that set.

3. The method according to claim 1 or 2, wherein the transport units comprise goods, for example packages, containers or bulk goods, and transport means, for example vessels, trucks, trains, wherein the predefined data format further comprises a transport means identifier and wherein the conclusions defined in the predefined rules further comprise transport means deviations to indicate that the transport means identifier of one of the events is different from the transport means indicated in the execution plan.

4. The method according to claim 1, 2 or 3, wherein the execution plan comprises a series of expectations defining the handlings of the transport units that have already occurred and expected handlings of the transport units that are to occur, the expectations being in the same predefined data format as the events.

5. The method according to claim 4, wherein the actions defined in the predefined rules comprise instructions for updating the expectations on the basis of the conclusions.

6. The method according to any one of the preceding claims, wherein the conclusions defined in the predefined rules comprise conflicts to indicate conflicting differences in the related events of a set; and wherein the method comprises the step of notifying the conflicts to users.

7. The method according to any one of the preceding claims, comprising the steps of assigning confidence levels to the events and giving events with higher confidence levels a higher priority in the predefined rules.

8. The method according to any one of the preceding claims, wherein the execution plan further comprises at least one set of alternative handlings of the transport units that are considered for the case that the expected handlings cannot occur in accordance with the orders.

9. The method according to claim 8, wherein the actions defined in the predefined rules comprise instructions for rerouting the related transport unit via one of the sets of alternative handlings.

10. The method according to any one of the preceding claims, further comprising the step of presenting the execution plan, updates of the execution plan or notifications derived therefrom in real-time to a plurality of subscribers.

11. A computer readable medium containing a computer executable algorithm comprising software code portions for performing the method according to any one of the preceding claims.

12. System for operating a logistics chain in which a plurality of transport units are handled by a plurality of services according to a plurality of orders, the system comprising:
a knowledge base provided with an input interface for interfacing with the plurality of services and accumulating data supplied by the plurality of services, the data comprising at least status data related to the services and status data related to the transport units; and
a computer system provided for maintaining an execution plan comprising an overview of handlings of the transport units that have already occurred and expected handlings of the transport units that are to occur in accordance with the orders;
**characterized in that** the computer device further comprises:
standardising means provided for standardising the status data related to the services and the status data related to the transport units into events which are in a predefined data format for being comparable with each other, the predefined data format comprising an event identifier, a transport unit identifier, a time identifier and a location identifier;
detecting means provided for detecting, among the standardised events, sets of related events that relate to the same transport unit, on the basis of at least the transport unit identifier;
storage means, storing a plurality of predefined rules for comparing the related events and defining conclusions which can be drawn from the comparison results and actions to be performed on the basis of the comparison results;
rule applying means provided for applying the predefined rules to each set of related events; and
updating means provided for updating the execution plan on the basis of the conclusions and actions defined by the predefined rules.

13. The system according to claim 12, wherein the conclusions defined in the predefined rules comprise one or more of the following: confirmations that the compared related events are in line with each other, time deviations to indicate that the time identifier of one of the related events of a set significantly differs from the time identifier of another of the related events of that set, location deviations to indicate that the location identifier of one of the related events of a set differs from the location identifier of another of the related events of that set.

14. The system according to claim 12 or 13, wherein the transport units comprise goods, for example packages, containers or bulk goods, and transport means, for example vessels, trucks, trains, wherein the predefined data format further comprises a transport means identifier and wherein the conclusions defined in the predefined rules further comprise transport means deviations to indicate that the transport means identifier of one of the events is different from the transport means indicated in the execution plan.

15. The system according to claim 12, 13 or 14, wherein the execution plan comprises a series of expectations defining the handlings of the transport units that have already occurred and expected handlings of the transport units that are to occur, the expectations being in the same predefined data format as the events.

16. The system according to claim 15, wherein the actions defined in the predefined rules comprise instructions for updating the expectations on the basis of the conclusions.

17. The system according to any one of the claims 12-15, wherein the conclusions defined in the predefined rules comprise conflicts to indicate conflicting differences in the related events of a set; and wherein the system comprises notification means provided for notifying the conflicts to users.

18. The system according to any one of the claims 12-17, comprising means for assigning confidence levels to the events and for giving events with higher confidence levels a higher priority in the predefined rules.

19. The system according to any one of the claims 12-18, wherein the execution plan further comprises at least one set of alternative handlings of the transport units that are considered for the case that the expected handlings cannot occur in accordance with the orders.

20. The system according to claim 19, wherein the actions defined in the predefined rules comprise instructions for rerouting the related transport unit via one of the sets of alternative handlings.

21. The system according to any one of the claims 12-20, further comprising means provided for presenting the execution plan, updates of the execution plan or notifications derived therefrom in real-time to a plurality of subscribers.

22. The system according to any one of the claims 12-21, wherein the computer system comprises one or more processing devices with appropriate software code portions forming the event standardising means, the related events detecting means, the rule applying means and the execution plan updating means.
